# EUROPEAN PATENT APPLICATION

(11) **EP 4 671 703 A1**
(43) Date of publication of application: **31.12.2025**
(21) Application number: 25181130.3
(22) Date of filing: 05.06.2025
(51) Int. Cl.: G01F 15/14, G01D 11/24

(54) **DEVICE FOR PROTECTING A FLUID METER AGAINST MOISTURE**

(30) Priority: 25.06.2024 FR 2406793
(71) Applicant: DIEHL METERING SAS, 68304 Saint Louis (FR)
(72) Inventor: Henry, Alicia, 68120 Richwiller (FR); Togni, Jean-Bruno, 68720 Saint-Bernard (FR)
(74) Representative: Diehl Patentabteilung

(57) **Abstract**

Device for protecting a fluid meter against moisture

The present invention relates to a device (1) for protecting electronic components (31) of a fluid measuring meter (9) against moisture, characterized in that the device (1) comprises:
- a casing (11) comprising:
- at least one opening (112) associated with a closure means (2) and configured to cooperate with one another in order to partition the casing (11),
- an interior volume (113) defining at least, on the one hand, a first portion (1131) configured for housing electronic components (31) and/or electric accumulators (32) and, on the other hand, a second portion (1132) incorporating at least one desiccant material, the first portion (1131) and the second portion (1132) of the interior volume of the casing (11) being configured to allow gas communication therebetween,

- an interface for mounting and/or fastening (12) the casing (11) on and/or to part of a measuring meter (9).

## Description

The present invention relates to the field of meters for measuring fluids and more particularly to the field of devices that enable electronic components of such meters to be protected against moisture.

Traditionally, measurements made by fluid flow meters on pipes, for example of water or gas distribution networks, were retrieved by an operator who read off the measurements displayed by each of the meters on a dial. In order to save time, in terms of the recurring difficulties in individually accessing each meter, electronic measurement transmission systems have been developed that combine, on the one hand, a data retrieval mechanism and, on the other hand, an interface for transmitting a signal, which are associated with each meter using a receiving device used by the operator responsible for collecting measurements. Electronic measurement transmission systems are generally based on the use of technologies that enable, on the one hand, short-range signal reception, for example by an inductive sensor in the context of measurement retrieval at a data storage component and, on the other hand, remote transmission of signals, for example of the radio wave, ultrasonic wave or infrared type, for communicating measurement data to a device handled by an operator.

However, the presence of meters in environments that are often moist, such as cellars or underground passages, or in proximity to the fluid, the volume or flow rate of which is being measured, requires the installation of sealed protection for the electronic signal transmission interface associated with the meter. One solution consists in coating the transmitting electronic interface with a resin. This hydrophobic resin thus creates a protective coating that seals the electronic interface off from moisture. However, due to limitations in terms of their bulk, electrical and electronic components are generally installed in particularly confined environments.

In view of this positioning, coating the installed electronic elements with a resin is limited by the difficulty in efficiently distributing this resin, which is substantially viscous before it is cured, to the narrow interspaces without any bubbles appearing in this material and risking deteriorating the sealing qualities provided by the resin. In addition, during the operation of coating the electronic elements, the resin is generally in the form of a mixture that incorporates curing reagents. Furthermore, the time interval during which it is conceivable for the resin to flow and be distributed around the electrical and electronic elements is particularly limited, so that it is often necessary for this operation of coating the electrical and electronic elements with a resin to be carried out in several steps and to involve a complex installation for managing and storing the resin. Moreover, in addition to this complexity of introducing the resin around the electrical elements and the electronic interface in order to form a sealed barrier, the resin, once cured, is particularly complicated to remove, for example when it is necessary to carry out work on the electronic interface, such as during repair or maintenance thereof. Furthermore, generally, when this electronic interface associated with the meter and encased in a resin malfunctions, the difficulty, if not impossibility, of easily carrying out work on the apparatus results in the entire electronic interface or even the meter being replaced.

The aim of the present invention is to overcome these drawbacks by proposing a solution that effectively protects the electronic and electrical elements present at the meter against moisture while being easy to implement and enabling easy access to these electronic and electrical elements as part of any work to be carried out in the event of a malfunction.

The invention relates to a device for protecting electronic components of a fluid measuring meter against moisture, characterized in that the device comprises:
- a casing comprising:
   - at least one opening associated with a closure means and configured to cooperate with one another in order to partition the casing,
   - an interior volume defining at least, on the one hand, a first portion configured for housing electronic components and/or electric accumulators and, on the other hand, a second portion incorporating at least one desiccant material, the first portion and the second portion of the interior volume of the casing being configured to allow gas communication therebetween,
- an interface for mounting and/or fastening the casing on and/or to part of a measuring meter.

The invention will be better understood by virtue of the following description, which relates to preferred embodiments provided by way of non-limiting examples and explained with reference to the appended schematic drawings, in which:

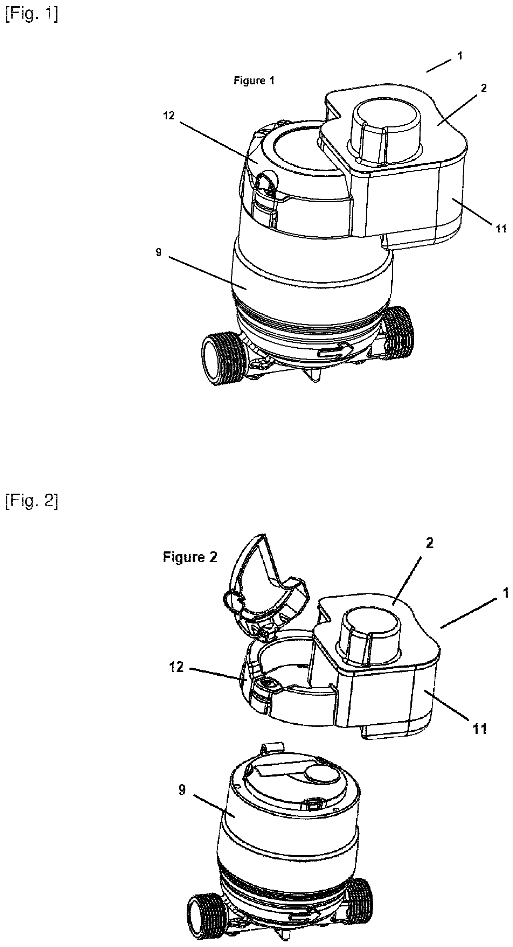

[Fig. 1] shows a schematic illustration of an example of a device for protecting electronic components against moisture according to the invention mounted on a meter,
[Fig. 2] shows a schematic illustration of an example of a device for protecting electronic components against moisture according to the invention detached from a meter,

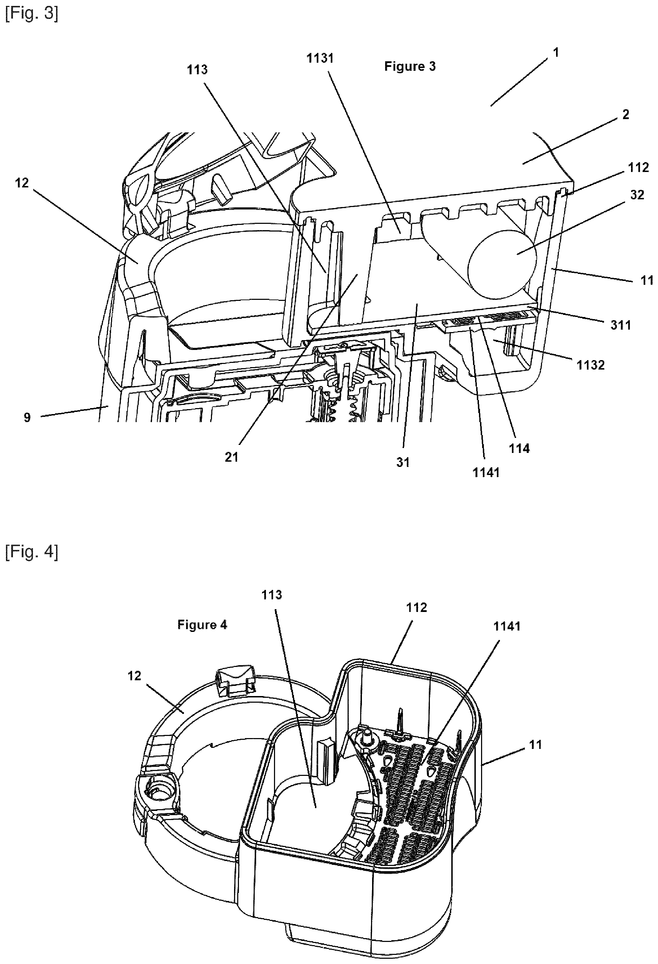

[Fig. 3] shows a schematic illustration of an example of a device for protecting electronic components against moisture according to the invention mounted on a meter in a sectional view detailing the interior volume of the casing of the device,
[Fig. 4] shows a schematic illustration of an example of a device for protecting electronic components against moisture according to the invention in a view from above detailing the first portion of the interior volume of the casing of the device,

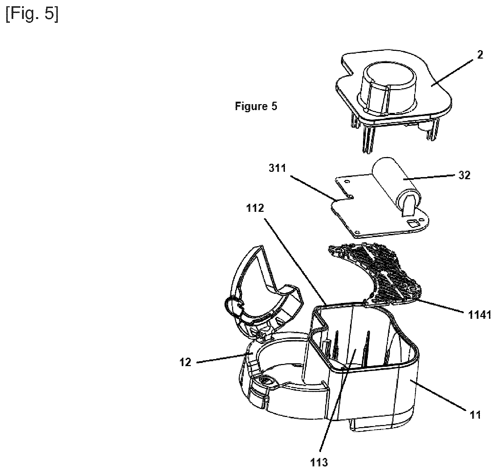

[Fig. 5] shows a schematic illustration in an exploded view of some of the various elements that make up a device for protecting electronic components against moisture according to the invention.

The present invention relates to a device 1 for protecting electronic components 31 of a fluid measuring meter 9 against moisture, characterized in that the device 1 comprises:
- a casing 11 comprising:
   - at least one opening 112 associated with a closure means 2 and configured to cooperate with one another in order to partition the casing 11,
   - an interior volume 113 defining at least, on the one hand, a first portion 1131 configured for housing electronic components 31 and/or electric accumulators 32 and, on the other hand, a second portion 1132 incorporating at least one desiccant material 4, the first portion 1131 and the second portion 1132 of the interior volume of the casing 11 being configured to allow gas communication therebetween,
- an interface for mounting and/or fastening 12 the casing 11 on and/or to part of a measuring meter 9.

The device 1 of the invention is thus based on the use of a desiccant material 4 to maintain and ensure a dry environment around the electronic components 31 and/or electric accumulators 32 that participate in retrieving and/or transmitting measurements from and/or to a meter 9. The desiccant material 4 is thus incorporated in a casing 11 common to the various electronic components 31 and/or electric accumulators 32. This incorporation is also coupled with the various specific sealing properties of the material used to form the casing 11 so that the desiccant material 4 makes it possible to limit, or even prevent, the presence of moisture that, by diffusion through the structural material of the casing 11, would be liable to be suspended in the atmosphere inside the casing 11. This technical solution has the advantage of not requiring positioning around the electronic components 31 and/or the electric accumulators 32 by forming a thickness between, on the one hand, the electronic 31 or electrical 32 element and, on the other hand, the interior wall of the casing 11. Thus, unlike a resin that coats the electronic components 31, using a desiccant material 4 allows an electronic element 31 to be positioned for short-range signal reception, for example by an inductive sensor, as close as possible to the meter 9 for retrieving measurements transmitted by this meter 9. By contrast with a coating resin, the desiccant material 4 present inside the casing 11 does not create an additional thickness forming an obstacle between the electronic signal reception element 31 and the meter 9.

It should be noted that, inside the casing 11, the desiccant material 4 is arranged in gas exchange proximity with the electronic components 31 and/or the electric accumulators 32. This construction, according to which the desiccant material 4 and the electronic 31 and/or electrical 32 elements share a common atmosphere, makes it possible to ensure efficient gas circulation between the various elements inside the casing 11.

Preferably, the interior volume 113 of the casing 11 is arranged so as to exhibit an architecture of shapes that are complementary to part of the exterior surfaces of the various elements, in particular the electronic 31, electrical 32 and desiccant 4 elements, intended to be positioned and installed inside the casing 11. This complementarity of shape coupled with an optimized juxtaposition of the elements 31, 32, 4 so as to limit the bulk inside the casing 11 makes it possible to optimally hold these elements 31, 32, 4 so that they are respectively wedged between at least one surface of the interior wall of the casing 11 and one or more juxtaposed elements with which a portion 1131, 1132 of the interior volume 113 of the casing 11 is shared. When the casing 11 is closed using the closure means 2, this closure means 2 is preferably welded to the peripheral edge of the opening 112 of the casing 11, the closure means 2 having a shape and dimensions that are substantially similar, or even identical, to those of the opening 112 of the casing 11. Similarly, preferably, in the context of installing the closure means 2 on the opening 112 of the casing 11, the interior surface of the closure means 2 exerts a pressure towards the interior of the casing 11 against at least one part of some of the elements 31, 32, 4 housed in the casing 11 such that all of the elements 31, 32, 4 positioned between the closure means 2 and the bottom of the casing 11 are pinched and clamped in position. This blocks and/or wedges these various elements 31, 32, 4 inside the casing 11 without any risk of involuntary or accidental movement.

According to a construction example relating to a first variant of the invention, when the closure means 2 partitions the opening 112 of the casing 11, the interior surface of the closure means 2 comprises at least one relief oriented towards the interior of the casing 11 and configured to press against at least one surface of an element 31, 32, 4 positioned inside the casing 11. This particular arrangement of the closure means 2 thus makes it possible to have a surface that is complementary to one or more surfaces of the elements 31, 32, 4 positioned inside the casing 11. The relief on the interior face of the closure means 2 may thus comprise one or more protuberances 21 oriented towards the interior of the casing 11 in order to be inserted deep inside the casing 11 so that the ends of these protuberances 21 can bear against at least one surface of one of the elements 31, 32, 4 housed inside the casing 11 and/or against an interior surface of the casing 11. This enables these various elements 31, 32, 4, even when positioned deep inside the casing 11 with respect to the opening 112 to be blocked and/or wedged by the closure means 2 mounted so as to partition the opening 112 of the casing 11.

According to a construction example relating to another variant of the invention that may be combined with any of the above-described variants, the casing 11 and/or the closure means 2 are/is made of a material essentially composed of at least one polycarbonate. Polycarbonate has the advantage of having clear stability in moist environments. Polycarbonate also has the advantage of enabling the closure means 2 to be assembled and secured to the opening 112 of the casing 11 by using ultrasonic welding technology, or even capillary assembly technology involving a resin arranged solely at the join between the closure means 2 on the opening 112 of the casing 11.

According to a construction example relating to another variant of the invention that forms an alternative construction to the preceding variant, the casing 11 and/or the closure means 2 are/is made of a material essentially composed of at least one polyolefin. Preferably, the polyolefins used are polypropylene, polyethylene or polymethylpentene or a mixture that combines these various components. In addition to their properties of not absorbing water and exhibiting chemical resistance to a large number of compounds, polyolefins also have the advantage of exhibiting greater sealing capabilities than those of polycarbonate despite having a lower rigidity than polycarbonate. Under these conditions, a casing 11 made of polyolefin can have a smaller material thickness than the same casing 11 made of polycarbonate. Furthermore, using a casing 11 made of polyolefin makes it possible to optimize the bulk of the casing 11 and of the device 1 on the meter 9. By way of example, a casing 11 made of polyolefin with a thickness of the order of 1 mm to 3 mm has properties, in particular sealing properties, that are similar to that of a casing 11 with a thickness of 10 mm to 30 mm and made of polycarbonate.

According to a construction example relating to another variant of the invention that forms an alternative construction to the two preceding variants, the casing 11 and/or the closure means 2 are/is made of a material essentially composed of at least one polyethylene terephthalate. Using such a material makes it possible to produce an essentially transparent and/or translucent casing 11 that allows a display to be incorporated among the electronic components 31 of the interior volume 113 of the casing 11. This display, for example an LCD screen, can thus be visible through the transparent structure of the casing 11.

According to a construction example relating to another variant of the invention that may be combined with any of the above-described variants, the casing 11 may comprise an additional opening in one of its surfaces, or even possibly through the closure means 2, in order to enable the passage of a connector or a cable. This opening has a shape and dimensions that are complementary to those of the cable or of the connector mounted so as to pass through the casing 11. This additional opening may be sealed, at the join between the casing 11 and the periphery of the cable or of the connector passing through, by positioning a resin at this join. The resin thus positioned makes it possible to seal the interior volume 113 of the casing 11 without interacting with the electronic components 31 and/or the electric accumulators 32, or even the desiccant material 4 housed inside the casing 11.

According to a construction example relating to another variant of the invention that may be combined with any of the above-described variants, the interior volume of the casing 11 comprises at least one separating interface 114 positioned between the first portion 1131 and the second portion 1132 and arranged to form a separation between the two portions 1131, 1132 of the interior volume 113 without creating a complete partition between these portions 1131, 1132. This separating interface 114 is configured to physically separate the elements 31, 32, 4 respectively positioned inside each of the two portions 1131, 1132 of the casing 11 while maintaining gas communication between these two portions 1131, 1132 and the elements 31, 32, 4 housed inside the casing 11. Preferably, in order to limit the bulk of the interior volume 113 of the casing 11, this separating interface 114 has a substantially planar arrangement, for example with a plate-shaped structure, a first surface of which is oriented towards the first portion 1131 intended for housing electronic components 31 and/or electric accumulators 32 and a second surface of which is oriented towards the second portion 1132 intended for housing the desiccant material 4. This separating interface 114 makes it possible in particular to avoid direct contact between the desiccant material 4 and the electronic components 31 and/or the electric accumulators 32, in particular when these elements 31, 32, 4 are compressed, or even slightly crushed, for example when they are respectively inserted or positioned inside the casing 11 or during positioning of the closure means 2 for partitioning the casing 11. By avoiding this direct contact, the separating interface 114 also makes it possible to keep the desiccant material 4 apart from the electronic 31 and electrical 32 elements and thus to avoid any risk of physical and/or chemical interaction therebetween. Moreover, by preventing any direct physical interaction between the elements 31, 32, 4 housed in the casing 11, the separating interface 114 protects the desiccant material 4 and more particularly its container against any risk of friction against electronic 31 or electrical 32 elements, and therefore of tearing, thereby eliminating the risk of the desiccant material 4 being dispersed inside the volume 113 of the casing 11. The gas exchange through the separating interface 114 is obtained by a partial partition between the two portions 1131 and 1132 of the interior volume 113 of the casing 11. According to a first construction example, this partial partition is achieved by the presence of perforations through the structure or the thickness of the separating interface 114. According to this example, the various edges of the separating interface 114 are in contact with the interior surface of the casing 11 in order to separate the two portions 1131 and 1132 of the interior volume 113 of the casing 11 while one or more through-perforations ensure gas exchange between the two portions 1131 and 1132 of this interior volume 113. These perforations may take the form of orifices distributed in a grid over at least one part of the separating interface 114 and/or in the form of through-grooves. According to a second construction example, the partial partition between the two portions 1131 and 1132 of the interior volume 113 of the casing 11 is achieved by virtue of an opening positioned at at least one of the edges of the separating interface 114. According to this example, only some of the various edges of the separating interface 114 are in contact with the interior surface of the casing 11. At least one of the edges of the separating interface 114 is positioned facing and at a distance from the interior surface of the casing 11. It should be noted that the arrangements of these two construction examples may be combined with one another. In addition, it should be noted that, preferably, at the join between the two portions 1131 and 1132 of the interior volume 113, the sealing surface of the separating interface 114 is at least greater than all of the through-surfaces enabling gas exchange between these two portions 1131 and 1132. By way of a construction example, at least one of the peripheral edges of the separating interface 114 is arranged so as to cooperate by complementarity of shape with part of the interior surface of the casing 11. This complementarity of shape may correspond to a groove borne by the interior surface of the casing 11 and with a width that is substantially complementary to the thickness of the separating interface 114. By way of a construction example, in addition or as an alternative to the preceding example, part of at least one surface of the separating interface 114 is positioned so as to bear against an interior surface of the casing 11 forming, for example, a flat portion.

According to a construction example relating to a variant of the invention specific to the above-described variant, the at least one separating interface 114 is formed by at least one part of a circuit board 311 that carries at least one part of the electronic components 31. According to this construction variant, the circuit board 311 is arranged so as to carry the at least one part of the electronic components 31 at its surface oriented towards the first portion 1131 intended for housing electronic components 31 and/or electric accumulators 32. This circuit board 311, which forms a separating interface between the two portions 1131, 1132 of the interior volume 113 of the casing 11, is arranged so as to partially partition the join between these two portions 1131, 1132 of the casing 11. This partial partition may be created, on the one hand, by perforations arranged so as to pass through the thickness of the circuit board 311 and/or, on the other hand, by an opening positioned at at least one of the edges of this circuit board 311 so that at least one of the edges of the separating interface 114 is positioned facing and at a distance from the interior surface of the casing 11.

According to a construction example relating to another variant of the invention that may be combined with any of the above-described variants, the at least one separating interface 114 is formed by juxtaposing in parallel planes, on the one hand, a circuit board 311 that carries at least one part of the electronic components and, on the other hand, a perforated wall 1141. According to this construction variant, the separation provided by the circuit board 311 is complemented by a perforated wall 1141. Preferably, this perforated wall 1141 has a substantially planar arrangement, for example with a plate-shaped structure. A first surface of this perforated wall 1141 is oriented towards the first portion 1131 intended for housing electronic components 31 and/or electric accumulators 32 and a second surface is oriented towards the second portion 1132 intended for housing the desiccant material 4. Preferably, the perforated wall 1141 is positioned on the side of the second portion 1132 intended for housing the desiccant material 4 with respect to the circuit board 311. The perforated wall 1141 may be positioned directly in contact against the surface of the circuit board 311 but may also be positioned at a distance from this circuit board 311 so that there is a space between the respective planes of the circuit board 311 and of the perforated wall 1141. Moreover, preferably, the through-perforations borne by the perforated wall 1141 are arranged facing the perforations or the opening of the partial partition of the circuit board 311. According to an alternative arrangement, the through-perforations borne by the perforated wall 1141 are arranged so as to be offset with respect to the perforations and/or the opening of the partial partition of the circuit board 311. This offset alignment of the openings of the perforated wall 1141 with respect to those of the circuit board 311 coupled with a spaced-apart positioning of the perforated wall 1141 with respect to the circuit board 311 makes it possible to maintain gas exchange between the two portions 1131, 1132 of the interior volume 113 of the casing 11 while providing a mechanical double barrier between these two portions 1131, 1132. This mechanical double barrier with openings or perforations that are not aligned with or are offset from one another thus makes it possible, in the event of one of the elements detaching or part of one of the elements positioned inside the casing 11 breaking, to limit the risk of this element or this element part moving from one of the two portions 1131, 1132 to the other portion and therefore to reduce any risk of accidental contact between the various parts or components present in each of the two portions 1131, 1132 of the interior volume 113 of the casing 11.

According to a construction example relating to another variant of the invention that may be combined with any of the above-described variants, the first portion 1131 of the interior volume 113 is of the order of 50% to 90% of the total interior volume of the casing 11 and the second portion 1132 of the interior volume 113 is of the order of 10% to 50% of the total interior volume of the casing 11. This difference in respective volume attributed to each of the portions 1131, 1132 of the interior volume 113 of the casing 11 makes it possible to optimize the bulk of the casing 11 by taking advantage in particular of the small volume required for housing a desiccant material 4 compared with the volume required for housing electronic components 31 and/or electric accumulators 32 inside the casing 11.

According to a construction example relating to another variant of the invention that may be combined with any of the above-described variants, the second portion 1132 of the interior volume 113 of the casing 11 is positioned between, on the one hand, the opening 112 of the casing 11 and, on the other hand, the first portion 1131 of the interior volume 113 of the casing 11. Such an arrangement of the interior volume 113 of the casing 11 makes it possible to insert and position the various elements 31, 32, 4 inside the casing 11 while enabling easy access to the desiccant material 4 in order to allow it to possibly be renewed when the moisture absorption capabilities thereof are saturated. The desiccant material 4 can thus be replaced without requiring electronic components 31 and/or electric accumulators 32 to be removed.

According to a construction example relating to another variant of the invention forming an alternative to the above-described variant, the first portion 1131 of the interior volume 113 of the casing 11 is positioned between, on the one hand, the opening 112 and, on the other hand, the second portion 1132 of the interior volume 113 of the casing 11. Such an arrangement of the interior volume 113 of the casing 11 makes it possible to insert and position the various elements 31, 32, 4 inside the casing 11 while enabling easy access to the electronic components 31 and/or the electric accumulators 32 so as to allow work to be carried out therein, for example, for a repair, without requiring the desiccant material 4 to be removed.

It should be noted that, for each of the two above-described construction examples, the device 1 of the invention comprises just one single opening 112 for accessing the interior volume 113 of the casing 11. This construction, with a single point of access to the interior of the casing 11 via this single opening 112, makes it possible to limit the number of points of entry to the interior of the casing 11 and therefore the zones at risk of infiltration of moisture into the interior 113 of the volume of the casing 11. Specifically, multiplying the number of points of access to the interior of the casing 11 leads to an increase in the risk of infiltration, in particular in the event of suboptimal, or even defective, partitioning of the interior volume 113 of the casing 11 by a closure means 2.

According to a construction example relating to another variant of the invention that may be combined with any of the above-described variants, the desiccant material 4 is of the aluminosilicate type or corresponds to a porous clay or zeolite material, or even a molecular sieve or a mixture of these different materials. It should also be noted that the desiccant material 4 may correspond to any type of material or mixture of materials that has moisture absorption properties that are identical or similar, or even equivalent, to those of the desiccant materials listed.

Of course, the invention is not limited to the embodiments that are described and shown in the appended drawings. Modifications remain possible, in particular from the point of view of the makeup of the various elements or through substitution of technical equivalents, without departing from the scope of protection of the invention.

## Claims

1. Device (1) for protecting electronic components (31) of a fluid measuring meter (9) against moisture, **characterized in that** the device (1) comprises:
- a casing (11) comprising:
- at least one opening (112) associated with a closure means (2) and configured to cooperate with one another in order to partition the casing (11),
- an interior volume (113) defining at least, on the one hand, a first portion (1131) configured for housing electronic components (31) and/or electric accumulators (32) and, on the other hand, a second portion (1132) incorporating at least one desiccant material (4), the first portion (1131) and the second portion (1132) of the interior volume of the casing (11) being configured to allow gas communication therebetween,
- an interface for mounting and/or fastening (12) the casing (11) on and/or to part of a measuring meter (9).

2. Moisture protection device (1) according to Claim 1, **characterized in that** the casing (11) and/or the closure means (2) are/is made of a material essentially composed of at least one polyolefin.

3. Moisture protection device (1) according to Claim 1, **characterized in that** the casing (11) and/or the closure means (2) are/is made of a material essentially composed of at least one polycarbonate.

4. Moisture protection device (1) according to Claim 1, **characterized in that** the casing (11) and/or the closure means (2) are/is made of a material essentially composed of at least one polyethylene terephthalate.

5. Moisture protection device (1) according to one of the preceding claims, **characterized in that** the interior volume of the casing (11) comprises at least one separating interface (114) positioned between the
first portion (1131) and the second portion (1132) and arranged to form a separation between the two portions (1131, 1132) of the interior volume (113) without creating a complete partition between these portions (1131, 1132).

6. Moisture protection device (1) according to Claim 5, **characterized in that** the at least one separating interface (114) is formed by at least one part of a circuit board (311) that carries at least one part of the electronic components (31).

7. Moisture protection device (1) according to either of Claims 5 and 6, **characterized in that** the at least one separating interface (114) is formed by juxtaposing in parallel planes, on the one hand, a circuit board (311) that carries at least one part of the electronic components and, on the other hand, a perforated wall (1141).

8. Moisture protection device (1) according to one of Claims 1 to 7, **characterized in that** the second portion (1132) of the interior volume (113) of the casing (11) is positioned between, on the one hand, the opening (112) of the casing (11) and, on the other hand, the first portion (1131) of the interior volume (113) of the casing (11).

9. Moisture protection device (1) according to one of Claims 1 to 7, **characterized in that** the first portion (1131) of the interior volume (113) of the casing (11) is positioned between, on the one hand, the opening (112) and, on the other hand, the second portion (1132) of the interior volume (113) of the casing (11).

10. Moisture protection device (1) according to one of the preceding claims, **characterized in that**, when the closure means (2) partitions the opening (112) of the casing (11), the interior surface of the closure means (2) comprises at least one relief oriented towards the interior of the casing (11) and configured to press against at least one surface of an element (31, 32, 4) positioned inside the casing (11).

11. Moisture protection device (1) according to one of the preceding claims, **characterized in that** the desiccant material (4) is of the aluminosilicate type or corresponds t a porous clay or zeolite material, or even a molecular sieve or a mixture of these different materials.
